# FASCICULE DE BREVET EUROPEEN

(11) **EP 0 880 883 B1**
(45) Date de publication et mention de la délivrance du brevet: **07.03.2001**
(21) Numéro de dépôt: 98420084.0
(22) Date de dépôt: 25.05.1998
(51) Int. Cl.: A01D 34/73

(54) **Fil de coupe pour débroussailleuses et taille-bordures**
Fadenschneider für Busch- und Kantentrimmer
Cutting wire for bush- and edgetrimmer

(30) Priorité: 27.05.1997 FR 9706718
(43) Date de publication de la demande: 02.12.1998
(73) Titulaire: SPEED FRANCE, 69658 ARNAS CEDEX (FR)
(72) Inventeur: Legrand, Emmanuel, 01480 Villeneuve (FR)
(74) Mandataire: Bratel, Gérard

(56) Documents cités:
- EP-A- 0 260 158
- WO-A-95/06402
- US-A- 4 223 441
- PATENT ABSTRACTS OF JAPAN vol. 018, no. 242 (C-1197), 10 mai 1994 & JP 06 030627 A (KOMATSU ZENOAH CO), 8 février 1994,

## Description

La présente invention concerne les fils de coupe destinés à tailler et couper la végétation, utilisables sur des appareils de motoculture à tête rotative communément appelés débroussailleuses et taille-bordures.

Ces appareils sont équipés généralement d'un moteur thermique ou électrique qui entraîne en rotation, à une vitesse élevée pouvant être comprise entre environ 3000 tours/minute et 12000 tours/minute, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur la végétation rencontrée.

Les fils de coupe couramment fabriqués et commercialisés, destinés à une telle utilisation, sont des monofilaments extérieurement lisses, le plus souvent du type "monomatière", qui ont par conséquent les qualités et les faiblesses de la matière première utilisée pour les réaliser.

Les matières premières les plus fréquemment utilisées pour la réalisation de tels fils de coupe sont des matières synthétiques, et plus particulièrement le polyamide 6, le copolyamide 6/66 et le copolyamide 6/12. Ces matières peuvent être très légèrement modifiées ou chargées, pour améliorer leurs caractéristiques de base. Ces matières sont toujours extrudées sous forme de monofilaments pouvant avoir des diamètres et des sections variés, en particulier une section ronde, mais aussi des profils polygonaux ou en étoile.

Les fils de coupe actuellement fabriqués constituent donc de bons compromis, mais leurs caractéristiques et performances restent limitées par les matières premières utilisées pour leur fabrication. Ces fils de coupe conservent ainsi, malgré leurs qualités, certains défauts ou insuffisances.

En particulier, la résistance aux chocs des fils de coupe actuels reste médiocre, ils sont sujets à une usure en bout par enlèvement de matière ou de morceaux, et ils donnent lieu au phénomène de "casse à l'oeillet" dû à l'échauffement, ce phénomène étant le suivant :

Un fil de coupe traditionnel, trop sollicité, finira par casser au niveau de l'oeillet, par lequel le fil sort de la tête rotative. En effet, par suite d'efforts mécaniques de flexion répétés, le fil s'échauffe à la sortie de l'oeillet de la tête. La montée en température progressive du fil engendre, à cet endroit, une boursouflure importante qui devient rapidement un point de fragilité, provoquant un départ de rupture du fil ; il s'ensuit alors une casse du fil.

Pour améliorer le comportement à l'abrasion des fils de coupe, on peut y inclure des additifs spécifiques, appelés "plastifiants", mais ceux-ci sont des produits onéreux et dangereux.

Par ailleurs, le fil de coupe traditionnel en polyamide n'est pratiquement pas dégradable dans l'environnement, après utilisation, et l'on estime à 10000 tonnes la quantité de fil de coupe, fragmenté ou effrité, qui est dispersée chaque année sur l'ensemble de la Terre. Un certain nombre de dispositions européennes en matière de protection de l'environnement visent à limiter la pollution résultant de la casse, de l'effritement ou de la fragmentation des monofilaments synthétiques, pendant leur utilisation, mais les fils actuels ne sont pas encore de nature à satisfaire ces exigences réglementaires.

On connaît aussi des fils de coupe constitués de deux matières distinctes, notamment avec une "âme" réalisée dans une première matière, et une "peau" réalisée dans une seconde matière. Par exemple, le brevet US N° 4223441 prévoit une âme constituée par des filaments métalliques, et une peau en matière synthétique. L'utilisation d'un tel fil de coupe est actuellement interdite, car les particules métalliques projetées à grande vitesse représentent un danger pour l'utilisateur. De plus, ce document préconise une peau en matière usable par abrasion, ce qui va à l'encontre des propriétés de résitance à l'abrasion habituellement recherchées. Une autre réalisation, décrite dans la demande de brevet japonais N° 06030627, comprend une âme en polyester, du type monofilament ou multifilament, enrobée dans une peau en polyamide, censée résister à l'abrasion. Toutefois, tel qu'il est connu dans sa nature la plus courante, le polyamide est matériau relativement dur et rigide, donnant satisfaction pour la constitution de fils à haute ténacité, mais devant être fortement modifié pour obtenir la souplesse souhaitable dans le cas de fils de coupe, souplesse qui est elle-même nécessaire pour obtenir des qualités de résistance aux chocs et à l'abrasion.

La présente invention vise à éliminer l'ensemble des inconvénients précédemment exposés, en fournissant un fil de coupe perfectionné, qui possède en particulier une excellente résistance aux chocs, à l'abrasion et à la rupture, tout en étant en grande partie destructible par photodégradation.

A cet effet, l'invention a pour objet un fil de coupe pour débroussailleuses et taille-bordures, caractérisé essentiellement en ce qu'il est constitué par une âme, de type monofilament ou multifilament, en matière synthétique à bonnes caractéristiques de raideur et de résistance à la traction, qui est enrobée d'une peau en polyuréthane, résistante à l'abrasion.

Ainsi, le fil de coupe objet de l'invention résulte de l'assemblage de deux matériaux, soit une âme centrale et une peau extérieure, ce qui confère au produit final des qualités nettement améliorées.

L'âme du fil de coupe, de type monofilament ou multifilament, donne à ce fil ses qualités de raideur et de résistance à la traction. Cette âme est réalisable dans une matière synthétique telle que polyamide, polyester, polypropylène ou polyéthylène, de caractéristiques mécaniques convenables.

Le revêtement extérieur ou peau en polyuréthane, recouvrant entièrement l'âme, et présentant de préférence une surface extérieure lisse, confère au fil de coupe les qualités recherchées de résistance aux chocs, à l'abrasion, à l'usure et à l'entaille, en cours d'utilisation. En particulier, étant naturellement souple, flexible et élastique (et notamment beaucoup plus souple et élastique qu'une peau en polyamide), la peau en polyuréthane absorbe les sollicitations diverses auxquelles est soumis le fil de coupe.

Selon sa composition, la peau en polyuréthane peut être aussi rendue plus ou moins facilement destructible par photodégradation.

Le fil de coupe, objet de l'invention, peut être fabriqué économiquement par coextrusion de l'âme centrale et de la peau en polyuréthane. Ce fil de coupe peut aussi être obtenu par recouvrement, c'est-à-dire en enrobant de polyuréthane un fil d'âme précédemment fabriqué, pour former la peau. Le polyuréthane possédant un bon pouvoir collant, celui-ci adhérera fortement à l'âme centrale, quel que soit le procédé de fabrication du fil de coupe, ce qui confère au produit final une grande cohésion.

L'âme centrale du fil de coupe peut posséder divers profils. Ainsi, dans le cas d'une âme de type monofilament, celle-ci peut présenter une section ronde, qui est la forme la plus simple, mais elle peut aussi posséder un profil en étoile ou dentelé, qui a pour avantage d'augmenter la surface d'adhésion de la peau en polyuréthane, et d'améliorer l'accrochage de cette dernière sur l'âme. Les mêmes résultats sont aussi obtenus, dans une variante, en prévoyant sur l'âme des conformations, telles que marquages, qui se répètent dans le sens de la longueur du fil de coupe.

Quant à la peau en polyuréthane, celle-ci peut posséder une section de contour extérieur rond, carré, polygonal ou autre, l'épaisseur de cette peau en polyuréthane étant plus ou moins importante, relativement à la grosseur de l'âme.

L'invention sera mieux comprise à l'aide de la description qui suit, en référence au dessin schématique annexé représentant, à titre d'exemples, deux formes de réalisation de ce fil de coupe pour débroussailleuses et taille-bordures :
Figure 1 est une vue en perspective d'un tronçon de fil de coupe conforme à la présente invention, avec âme de type monofilament ;
Figure 2 est une vue en perspective d'un autre tronçon de fil de coupe avec âme de type multifilament.

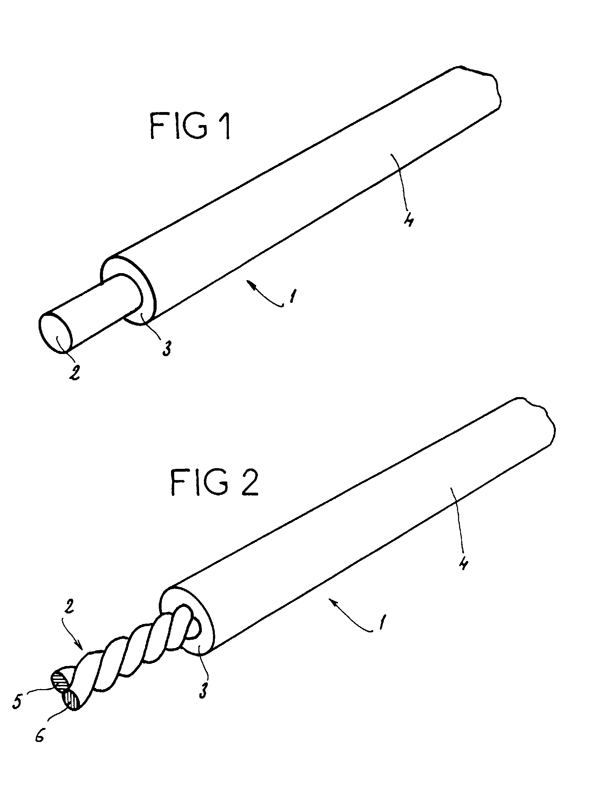

La figure 1 montre un court tronçon d'un fil de coupe 1, pour débroussailleuses ou taille-bordures, en faisant apparaître la section de ce fil. Le fil de coupe 1 se compose d'un fil d'âme 2, ici de section ronde, qui est enrobé de toutes parts d'un revêtement ou peau 3, dont la section en couronne possède un contour extérieur qui est aussi de forme ronde.

Le fil d'âme 2 est un fil en polyamide, semblable à un monofilament traditionnel.

La peau 3 est réalisée en polyuréthane, et elle présente une surface extérieure lisse 4. Cette peau 3 confère au fil de coupe 1 les propriétés recherchées de résistance aux chocs et à l'abrasion. A titre d'exemple, on peut ici utiliser avantageusement un polyuréthane commercialisé sous la dénomination "ELASTOLLAN" (marque enregistrée au bénéfice de ELASTOGRAN GmbH), avec lequel les essais effectués par le Demandeur ont donné des résultats intéressants.

Ce fil de coupe 1 peut notamment être obtenu, en une seule opération, par coextrusion du fil d'âme 2 et de la peau en polyuréthane 3.

La figure 2 montre un court tronçon d'un autre fil de coupe 1, dans lequel le fil d'âme 2 est du type multifilament résultant de la réunion de deux ou plusieurs fils élémentaires 5 et 6 en polyamide, polyester, polypropylène ou polyéthylène. Ce fil d'âme 2 est, ci aussi, revêtu d'une peau 3 en polyuréthane. Le fil de coupe 1 est ici obtenu par recouvrement, en fabriquant dans un premier temps le fil d'âme 2 de type multifilament, et en enrobant ensuite ce fil d'âme 2 par la peau 3 en polyuréthane.

L'on ne s'éloignerait pas du cadre de l'invention, telle que définie dans les revendications, en modifiant le rapport des diamètres de l'âme 2 et de la peau en polyuréthane 3, ou en donnant à la section de l'âme 2 et/ou de la peau 3 un contour autre que circulaire.

## Revendications

1. Fil de coupe pour débroussailleuses et taille-bordures, à tête rotative, le fil (1) comprenant au moins un filament en matière synthétique à qualité de renforcement, noyé dans un matériau flexible résistant à l'abrasion, caractérisé en ce que le filament est une âme (2) de type monofilament, en polyamide, de section ronde ou de profil en étoile ou dentelé, qui est enrobée d'une peau (3) en polyuréthane.

2. Fil de coupe selon la revendication 1, caractérisé en ce que son âme (2) en polyamide présente une section ronde.

3. Fil de coupe selon la revendication 1, caractérisé en ce que son âme (2) en polyamide possède un profil en étoile ou dentelé.

4. Fil de coupe selon l'une quelconque des revendications 1 à 3, caractérisé en ce que sa peau (3) en polyuréthane présente une surface extérieure lisse (4).

5. Fil de coupe selon l'une quelconque des revendications 1 à 4, caractérisé en ce que sa peau (3) en polyuréthane possède une section de contour extérieur rond.

6. Fil de coupe selon l'une quelconque des revendications 1 à 4, caractérisé en ce que sa peau (3) en polyuréthane possède une section de contour extérieur carré ou polygonal.

7. Fil de coupe selon l'une quelconque des revendications 1 à 6, caractérisé en ce qu'il est obtenu par coextrusion de l'âme (2) en polyamide et de la peau (3) en polyuréthane.

8. Fil de coupe selon l'une quelconque des revendications 1 à 6, caractérisé en ce qu'il est obtenu par recouvrement, en enrobant de polyuréthane un fil d'âme (2) en polyamide précédemment fabriqué, pour former la peau (3).

## Patentansprüche

1. Schneidfaden für Buschmäher und Kantentrimmer mit rotierendem Kopf, wobei der Faden (1) mindestens ein Filament aus synthetischem Stoff mit verstärkender Qualität umfasst, das in einen flexiblen abriebfesten Werkstoff eingebettet ist, dadurch gekennzeichnet, dass das Filament ein Kern (2) vom Monofilament-Typ ist, aus Polyamid mit rundem Querschnitt oder mit sternförmigem oder gezähntem Profil, der mit einer Haut (3) aus Polyurethan beschichtet ist.

2. Schneidfaden nach Anspruch 1, dadurch gekennzeichnet, dass sein Kern (2) aus Polyamid einen runden Querschnitt aufweist.

3. Schneidfaden nach Anspruch 1, dadurch gekennzeichnet, dass sein Kern (2) aus Polyamid ein sternförmiges oder gezähntes Profil besitzt.

4. Schneidfaden nach einem der Ansprüche 1 bis 3, dadurch gekennzeichnet, dass seine Haut (3) aus Polyurethan eine glatte Aussenfläche (4) aufweist.

5. Schneidfaden nach einem der Ansprüche 1 bis 4, dadurch gekennzeichnet, dass seine Haut (3) aus Polyurethan einen Querschnitt mit rundem Aussenumriss aufweist.

6. Schneidfaden nach einem der Ansprüche 1 bis 4, dadurch gekennzeichnet, dass seine Haut (3) aus Polyurethan einen Querschnitt mit quadratischem oder polygonalem Aussenumriss aufweist.

7. Schneidfaden nach einem der Ansprüche 1 bis 6, dadurch gekennzeichnet, dass er durch Co-Extrusion des Kerns (2) aus Polyamid und der Haut (3) aus Polyurethan erhalten wird.

8. Schneidfaden nach einem der Ansprüche 1 bis 6, dadurch gekennzeichnet, dass er durch Beschichten erhalten wird, indem ein Fadenkern (2) aus Polyamid, der zuvor hergestellt wurde, mit Polyurethan überzogen wird, um die Haut (3) zu bilden.

## Claims

1. Cutting wire for brush and edge trimmers with a rotating head, the cord (1) comprising at least one filament made of reinforcing quality synthetic material, embedded in an abrasion-resistant flexible material, characterized in that the filament is a core (2) of the monofilament type made of polyamide, with a round section or with a star-shaped or serrated profile, which is coated with a skin (3) made of polyurethane.

2. Cutting wire according to claim 1, characterized in that its core (2) made of polyamide has a round section.

3. Cutting wire according to claim 1, characterized in that its chore (2) made of polyamide possesses a star-shaped or serrated profile.

4. Cutting wire according to any one of claims 1 to 3, characterized in that its skin (3) made of polyurethane has a smooth outer surface (4).

5. Cutting wire according to any one of claims 1 to 4, characterised in that its skin (3) made of polyurethane in that its skin (3) made of polyurethane possesses a section with a round outer contour.

6. Cutting wire according to any one of claims 1 to 4, characterized in that its skin (3) made of polyurethane possesses a section with a square or polygonal outer contour.

7. Cutting wire according to any one of claims 1 to 6, characterized in that it is obtained by coextruding the core (2) made of polyamide and the skin (3) made of polyurethane.

8. Cutting wire according to any one of claims 1 to 6, characterized in that it is obtained by a covering process, by coating a previously produced cord having a core (2) made of polyamide with polyurethane, to form the skin (3).
